# EUROPEAN PATENT APPLICATION

(11) **EP 4 661 188 A1**
(43) Date of publication of application: **10.12.2025**
(21) Application number: 24926283.3
(22) Date of filing: 12.12.2024
(51) Int. Cl.: H01M 50/383, H01M 10/658, H01M 50/273, H01M 50/317, H01M 50/249

(54) **BATTERY SYSTEM AND VEHICLE INCLUDING SAME**

(30) Priority: 15.03.2024 KR 20240036814
(71) Applicant: LG ENERGY SOLUTION, LTD., Seoul 07335 (KR)
(72) Inventor: JUNG, Ki Taek, Daejeon 34122 (KR); PARK, Won Kyoung, Daejeon 34122 (KR); KIM, Young Gil, Daejeon 34122 (KR)
(74) Representative: BCKIP Part mbB
(86) International application number: PCT/KR2024/020281
(87) International publication number: WO 2025/192829

(57) **Abstract**

Disclosed are a battery system and a vehicle including the same, the battery system including a battery module, a pack casing in which the battery module is installed, and an elastic part installed between the pack casing and the battery module and configured to press the battery module based on the pack casing, the elastic part having an end supported on the pack casing or the battery module by means of a cap made of a fire resistance material.

## Description

### [Technical Field]

The present disclosure relates to a battery system with improved safety in an abnormal battery situation, and a vehicle including the same.

### [Background Art]

Recently, a technology for reducing carbon has been actively developed to solve environmental issues such as abnormal atmospheric temperatures. In order to reduce carbon, energy needs to be produced by environmentally friendly methods instead of fossil fuel, the produced energy needs to be stored in the form of electrical energy, and the stored electrical energy needs to be used for vehicles, various types of industrial sites, and homes.

In order to utilize electrical energy while reducing carbon, it is essential to use batteries capable of storing and retrieving electrical energy. Therefore, it is essential to ensure the performance of the battery to sufficiently store electrical energy and use the electrical energy without discomfort.

The battery mainly uses a redox reaction of metal ions. The battery uses metal ions with a high density to improve a capacity of the battery, charging and discharging performance, and efficiency of the battery. Many studies are also being conducted on materials, which constitute electrolytes, and on solid electrolytes and the like. However, there is a general problem in that stability of the battery deteriorates as the performance of the battery is developed.

Batteries used in vehicles, industries, or homes are manufactured in physical units called packs. The battery pack is configured such that a plurality of battery cells is embedded in a battery casing and sealed. The battery pack serves to prevent fire from spreading to the outside even in the event of an accident such as thermal runaway in the battery and protect the battery cells therein so that the battery cells are not degraded by being affected by an external environment, or the battery cells are not physically damaged.

In the battery pack, the plurality of battery cells is embedded in an intermediate form of a module. The battery module is configured by assembling the plurality of battery cells into one module. A plurality of modules is fastened into a pack casing, such that the battery pack is completely manufactured. When the battery is maintained, the maintenance may be performed on the unit of the module, which facilitates the maintenance.

A plurality of unit battery cells, which constitutes the battery module, includes a positive electrode, a negative electrode, and an electrolyte. Because the battery cell generates heat when the battery cell is charged and discharged, it is necessary to effectively dissipate heat from the battery cell. In addition, the battery module or the battery pack needs to be designed to efficiently dissipate heat to prevent a safety accident.

Meanwhile, the battery may be degraded when the battery is subjected to manufacturing errors, when the battery is excessively charged or discharged, or when the battery ages. Further, when the battery continues to deteriorate, a fire may eventually occur. Therefore, it is necessary to prepare in advance to prevent a fire from occurring in the battery. To this end, it is important to consistently sense a state of the battery and recognize and cope with, in advance, a problem when the problem occurs. In the event of an unexpected problem, it is necessary to minimize damage.

In particular, when a flame occurs in a particular cell of a particular module among the plurality of battery modules in the battery pack, the propagation of the flame to another adjacent battery cell needs to be prevented, and the propagation of the flame to another adjacent module also needs to be prevented. Therefore, in view of the battery module, the gas in the battery cell with a problem needs to be smoothly vented, and it is possible to maximally prevent or delay the influence of the vented gas and the flame to another cell or another module.

The foregoing explained as the background is intended merely to aid in the understanding of the background of the present disclosure, and is not intended to mean that the present disclosure falls within the purview of the related art that is already known to those skilled in the art.

### [Disclosure]

### [Technical Problem]

The present disclosure has been made in an effort to solve the above-mentioned problem, and an object of the present disclosure is to provide a battery system, in which in the event of a fire in a particular battery cell or battery module, the fire is prevented from propagating to an adjacent cell or an adjacent module, and a gas is smoothly vented, such that battery safety may be improved, and a vehicle including the same.

Technical problems to be solved by the present disclosure are not limited to the above-mentioned technical problems, and other technical problems, which are not mentioned above, may be clearly understood from the following descriptions by those skilled in the art to which the present disclosure pertains.

### [Technical Solution]

In order to achieve the above-mentioned object, the present disclosure provides a battery system including: a battery module; a pack casing in which the battery module is installed; and an elastic part installed between the pack casing and the battery module and configured to press the battery module based on the pack casing, the elastic part having an end supported on the pack casing or the battery module by means of a cap made of a fire resistance material.

In the case of the battery system according to the present disclosure, a venting part may be formed on an outer surface of the battery module facing the pack casing, and the elastic part may be disposed at a point that avoids the venting part.

In the case of the battery system according to the present disclosure, the elastic part may include a first cap, a second cap, and an elastic body, and the elastic body may be positioned between the first cap and the second cap.

In the case of the battery system according to the present disclosure, the first cap of the elastic part may be tightly attached to an inner surface of the pack casing, and the second cap of the elastic part may be tightly attached to an outer surface of the battery module.

In the case of the battery system according to the present disclosure, the first cap or the second cap of the elastic part may be attached to an inner surface of the pack casingor an outer surface of the battery module by a bonding agent, and the bonding agent may be made of a heat resistance material.

In the case of the battery system according to the present disclosure, the first cap of the elastic part may be inserted and fixed into the second cap, such that the elastic body is kept compressed between the first cap and the second cap.

In the case of the battery system according to the present disclosure, the first cap of the elastic part may be withdrawn from the second cap by a gas or flame produced in the battery module, and the elastic body may be stretched by the withdrawal of the first cap.

In the case of the battery system according to the present disclosure, the first cap of the elastic part may be withdrawn from the second cap by an increase in internal temperature of the pack casing, and the elastic body may be stretched by the withdrawal of the first cap.

In the case of the battery system according to the present disclosure, the first cap of the elastic part may be caught and fixed in a state of being inserted into the second cap, and the first cap may be separated from the second cap when the second cap is expanded by a high temperature.

In the case of the battery system according to the present disclosure, the first cap of the elastic part may be bonded and fixed in a state of being inserted into the second cap, and the first cap may be separated from the second cap when a bonding force is eliminated by a high temperature.

In the case of the battery system according to the present disclosure, the elastic part may be provided as a plurality of elastic parts between the pack casing and the battery module, and an elastic force of the elastic part may increase as a distance from a center of the pack casing decreases.

In the case of the battery system according to the present disclosure, the elastic part close to the center of the pack casing may have a higher elastic modulus or a larger amount of compression than the elastic part spaced apart from the center of the pack casing.

In the case of the battery system according to the present disclosure, a module cover may be coupled to the battery module and cover one side surface of the battery module, and the elastic part may be provided between the pack casing and the module cover.

In the case of the battery system according to the present disclosure, the elastic part may be disposed at a point between the pack casing and the module cover and fixed to the module cover.

In the case of the battery system according to the present disclosure, one end of the elastic part may be fixed to the module cover, and the other end of the elastic part may be spaced apart from the pack casing.

In the case of the battery system according to the present disclosure, the elastic part may be stretched by a gas or flame or a high temperature in the pack casing, and two opposite ends of the elastic part may be respectively supported on the pack casing and the module cover when the elastic part is stretched.

In the case of the battery system according to the present disclosure, the pack casing may include: a casing body opened at one side thereof; and a pack lid configured to close the casing body, and the elastic part may be positioned between the pack lid and the battery module.

In the case of the battery system according to the present disclosure, a spacing distance between the pack lid and the battery module may beincreased by expansion of the pack lid when a gas or flame or a high temperature occurs in the pack casing, the elastic part may be stretched to the extent that the spacing distance between the pack lid and the battery module is increased, and the elastic part may press the battery module based on the pack lid.

A vehicle according to the present disclosure includes the above-mentioned battery system.

### [Advantageous Effects]

According to the battery system and the vehicle including the same of the present disclosure, the propagation of a fire to another adjacent cell or module may be prevented in the event of the fire in a particular battery cell or battery module, and the gas may be smoothly vented from a battery cell or battery module having a problem, thereby improving overall safety of the battery system and a high-level system using the same.

The effects obtained by the present disclosure are not limited to the aforementioned effects, and other effects, which are not mentioned above, will be clearly understood by those skilled in the art from the following description.

### [Description of Drawings]

FIG. 1 is a view illustrating a battery system according to an embodiment of the present disclosure.
FIG. 2 is a view illustrating an elastic part of the battery system illustrated in FIG. 1.
FIG. 3 is a cross-sectional view illustrating a case in which the elastic part is provided at an upper side of the battery system of the present disclosure.
FIG. 4 is a cross-sectional view illustrating a case in which the elastic part is provided at a lateral side of the battery system of the present disclosure.
FIG. 5 is a view illustrating a state in which the elastic part illustrated in FIG. 2 is stretched.
FIG. 6 is a view illustrating a state in which the elastic part illustrated in FIG. 3 is stretched.
FIG. 7 is a view illustrating a state in which the elastic part illustrated in FIG. 4 is stretched.
FIGS. 8 to 10 are views illustrating various embodiments of the elastic part of the present disclosure.
FIG. 11 is a view for explaining a difference between the elastic parts at respective points in the battery system according to the embodiment of the present disclosure.

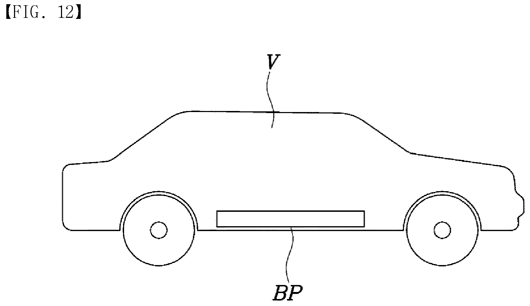

FIG. 12 is a view illustrating a battery pack and a vehicle to which the battery system of the present disclosure is applied.

### [Best Mode]

In the description of the embodiments disclosed in the present specification, the specific descriptions of publicly known related technologies will be omitted when it is determined that the specific descriptions may obscure the subject matter of the embodiments disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element. Singular expressions include plural expressions unless clearly described as different meanings in the context.

In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof. The suffixes "module", "unit", "part", and "portion" used to describe constituent elements in the following description are used together or interchangeably in order to facilitate the description, but the suffixes themselves do not have distinguishable meanings or functions.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

Hereinafter, embodiments disclosed in the present specification will be described in detail with reference to the accompanying drawings. The same or similar constituent elements are assigned with the same reference numerals regardless of the reference numerals, and the repetitive description thereof will be omitted.

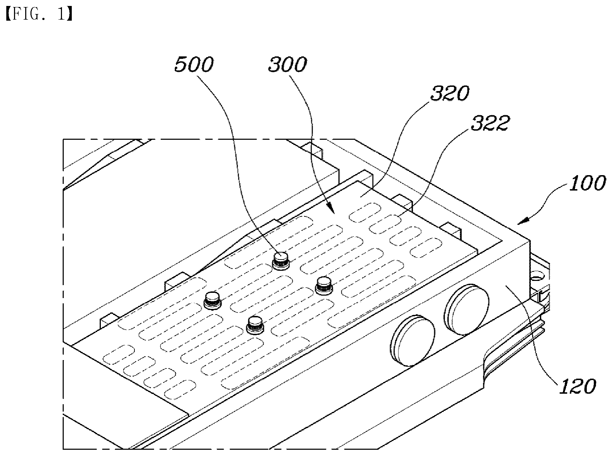

As illustrated in FIG. 1, in a battery system, a plurality of battery cells are assembled to constitute a battery module 300, and a plurality of battery modules 300 are assembled to constitute a battery pack. The battery module 300 mentioned in the present disclosure refers to an assembly made by assembling the plurality of battery cells and includes various cases including a case in which a plurality of battery cells are stacked and embedded in a separate sealed housing and a case in which a plurality of battery cells assembled in the form of an assembly by a strap, a frame, or the like to define one unit assembly.

Meanwhile, in the event of thermal runaway in some of the battery cells or the battery module 300 in the battery pack, a gas or flame released from the corresponding cell or the module 300 may propagate to another adjacent cell or module 300 provided in the battery pack. In this case, a flame or gas attack between the adjacent battery cells or the adjacent modules 300 may very quickly cause secondary damage due to the occurrence of a fire in the entire battery pack or the propagation of a flame to the outside. Therefore, it is necessary to minimize a likelihood of the flame propagation from the battery cell or the battery module 300, in which thermal runaway occurs, to the adjacent battery cell or module 300 and maximally delay the flame propagation.

In the related art, in the event of thermal runaway in some of the cells or the module 300 in the battery pack, high pressure is generated because of a gas or flame released from the corresponding cell or the module 300, and a module cover 320, which covers the module 300, is separated by the instantaneous high pressure. For this reason, there is a problem in that the gas or flame propagates to the adjacent cell or module 300, and the gas or flame quickly propagates in the battery pack.

According to the present disclosure, the gas or flame is smoothly vented from the cell with the problem without resistance, and the module cover 320 stably covers the module 300 while pressing the module 300 without separating, such that the gas or flame does not propagate to the adjacent cell or module 300.

Specifically, as illustrated in FIG. 1, the module cover 320 is coupled to the battery module 300 of the present disclosure. The plurality of battery cells are assembled to constitute the battery module 300, and the module cover 320 is coupled to upper ends or lateral ends of the cells to protect the corresponding battery module 300 in the event of a fire in the adjacent module 300. In the illustrated embodiment, the module cover 320 is coupled to the upper end of the module 300. However, the module cover 320 is not limited thereto, and the module cover 320 may be fixed to various points such as a lateral or lower end of the module 300 and cover the cells that constitute the module 300.

Meanwhile, because the module cover 320 needs to protect the cells of the battery module 300 from the gas or flame, the module cover 320 may be made of a refractory material such as mica (mica material). The module cover 320 made of the above-mentioned material prevents a high-temperature external gas or flame from being introduced into the corresponding module 300.

In addition, the module cover 320 needs to be configured to vent the gas or flame in the event of thermal runaway in the battery cell. Therefore, as illustrated in FIG. 1, venting parts 322 are formed on the module cover 320. At ordinary times, the venting parts 322 cover the battery module 300 to prevent the introduction of the external gas or flame. In the event of thermal runaway in the cells positioned below the venting parts 322, only the venting parts 322 provided at necessary points need to operate to allow the gas or flame generated therein to be vented. To this end, as illustrated, only a part of the venting part 322 has a cut shape, such that the venting part 322 is opened outward, only as necessary. In addition, the venting parts 322 with various shapes may be applied as long as the venting parts 322 satisfy the condition in which the venting parts 322 appropriately serve to perform the covering operation at ordinary times and are opened by high pressure only as necessary.

In the event of thermal runaway in the battery cell positioned below the venting part 322, the venting part 322 is separated from the module cover 320 and forms a venting hole. The gas and flame produced in the cell is vented to the outside of the module 300 through the formed venting hole. Further, because the flame propagation to the adjacent battery cell needs to be prevented at the same time when the flame is vented through the venting hole, the module cover 320 needs to appropriately vent the flame at the point to which high pressure is applied and to appropriately cover the cell at the adjacent point to prevent the flame propagation. That is, even if a high-temperature, high-pressure ambience is established in the module cover 320, the module cover 320 needs to appropriately press the module 300.

In the related art, in order to achieve the above-mentioned function, a foam rope made of a material such as foamed silicone is applied to press the module cover 320 from a pack lid 140. However, there is a problem in that the foam rope is thermally deformed in a high-temperature situation caused by thermal runaway, which decreases a pressing force. In addition, because of the decreased pressing force of the foam rope, the module cover 320 separates, and the propagation of the gas or flame to the adjacent cell or module 300 occurs. For this reason, a risk of structural collapse in the battery pack is increased, and stability of the battery pack cannot be sufficiently ensured.

Therefore, in the case of the present disclosure, the pressing operation is performed by a material with fire resistance, instead of the foam rope. Further, a cap made of a fire resistance, insulating material is also used to support the components, which perform the pressing operation, on the module cover 320 or a pack casing 100. Therefore, the module cover 320 is consistently pressed without a change in elasticity even in the event of a flame, such that the flame propagation is prevented, and the pressing operation is performed without degrading the venting effect in the related art. In addition, even though the metallic material is used to perform the pressing operation to ensure fire resistance, a risk of a short circuit between the module 300 and the pack casing 100 may be reduced because the cap for supporting the metallic material is made of an insulating material.

Specifically, the present disclosure proposes the battery system that includes elastic parts 500 supported between the pack casing 100 and the battery module 300, and an end of the elastic part 500 is supported by the cap made of a fire resistance material.

The battery module 300 includes the module cover 320, and the venting parts 322 including the venting holes, through which the gas or flame may be discharged to the outside in the event of thermal runaway in the battery cell, are provided on an outer surface of the battery module 300 that faces the pack casing 100. As illustrated in FIG. 1, the elastic parts 500 are disposed while avoiding the venting parts 322. With this arrangement, the gas or flame may be smoothly vented to the outside in the event of thermal runaway in the battery cell, and the flame propagation to the adjacent battery cell or module 300 may be effectively prevented.

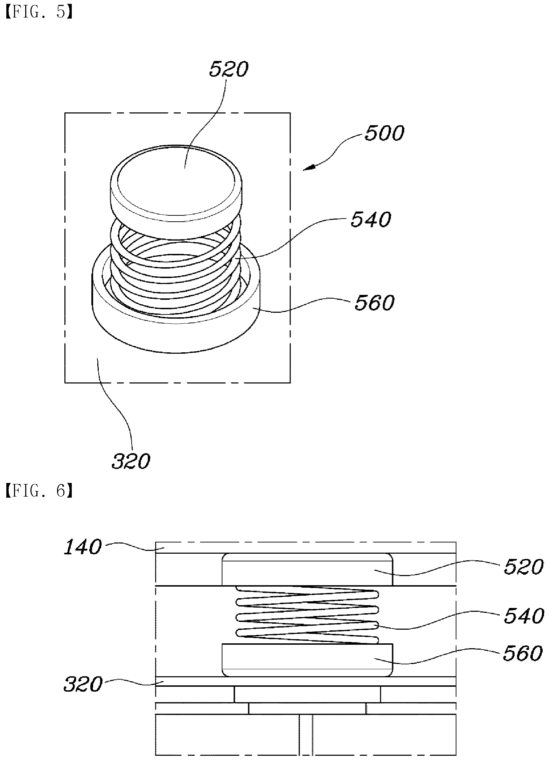

As illustrated in FIG. 5, the elastic part 500 includes first and second caps 520 and 560 at two opposite ends, and an elastic body 540. The elastic body 540 is positioned between the first cap 520 and the second cap 560. The first and second caps 520 and 560, which are the two opposite ends of the elastic part 500, may be made of a fire resistance material because the first and second caps 520 and 560 need to prevent the propagation of the gas or flame to the adjacent cell or module 300 in the event of thermal runaway in the battery cell or the battery module 300. In addition, the cap at the end may be made of mica or the like, i.e., a fire resistance material because the cap needs to be lightweight and ensure insulation.

The elastic body 540 of the elastic part 500, which performs the pressing operation, may be considered as a spring or the like made of a metallic material because the elastic body 540 needs to be strong even against a high-temperature, high-pressure gas or flame. However, because it is essential to ensure insulation between the pack casing 100 and the battery module 300 in case that the elastic body 540 made of a metallic material is used, the caps, which cover the two opposite ends of the elastic part 500, need to have insulation as well as fire resistance. With this selection of the cap material, the elastic part 500 of the present disclosure transmits a necessary pressing force to the module 300 and ensures insulation in a thermal runaway situation. Of course, the battery system of the present disclosure is not limited only to the above-mentioned material or shape.

The pack casing 100 may include a casing body 120 and the pack lid 140 to implement assemblability. The casing body 120 may have a shape opened at an upper or lower side thereof or in some instances has a shape opened at a lateral side thereof. The pack lid 140 serves to close the opened side of the casing body 120. As illustrated in FIG. 1, the casing body 120 has an internal space defined by a bottom surface and a sidewall and has a shape opened at an upper side thereof. The battery module 300 is mounted in the casing body 120 through the opened upper side. Further, the opened upper side of the casing body 120 is closed by the pack lid 140. Because a high-temperature, high-pressure environment is established in the pack casing 100 in a thermal runaway situation of the battery module 300, the pack lid 140 may be easily deformed thermally by expansion in case that the gas or flame is produced by thermal runaway in the battery cell or the battery module 300. This expansion causes a gap between the expanded portion and the module cover 320, and the pressing force for pressing the corresponding module cover 320 is decreased, which may separate the module cover 320.

The present disclosure is provided to minimize a risk of heat propagation and smoothly vent the gas by preventing the module cover 320 of the battery module 300 from separating even if the casing body 120 or the pack lid 140 expands.

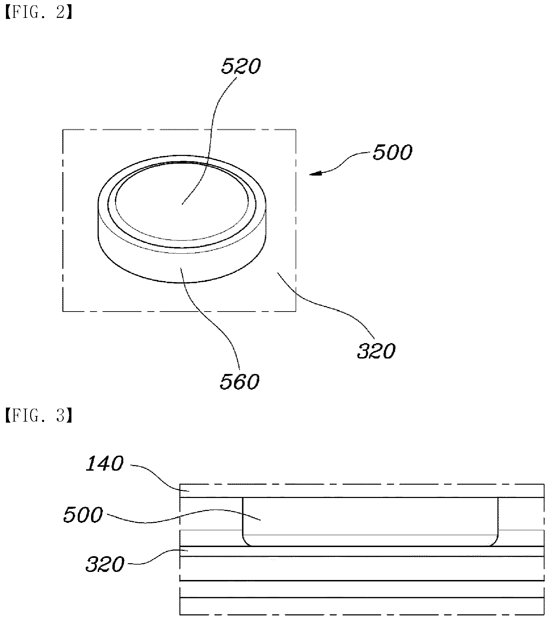

The elastic part 500 is installed between the pack casing 100 and the battery module 300, and the first cap 520 of the elastic part 500 is inserted and fixed into the second cap 560, such that the elastic body 540 is kept compressed between the first cap 520 and the second cap 560. In the event of thermal runaway in the battery cell or the battery module 300, the battery module 300 or the module cover 320 is separated by a high-pressure gas and a high-temperature flame, which easily causes the propagation of the gas or flame to the adjacent cell or module 300. As illustrated in FIG. 3, in order to prevent the battery module 300 or the module cover 320 from separating even in the event of thermal runaway, the first cap 520 of the elastic part 500 may be tightly attached to the lower end of the pack lid 140, and the second cap 560 may be tightly attached to the upper end of the module cover 320. When the first cap 520 of the elastic part 500 is tightly attached to the lower end of the pack lid 140 and the second cap 560 is tightly attached to the upper end of the module cover 320, the first cap 520 and the second cap 560 may be attached and fixed by a bonding agent. In this case, the bonding agent may be made of a material with heat resistance that may withstand a high-temperature, high-pressure environment caused by thermal runaway.

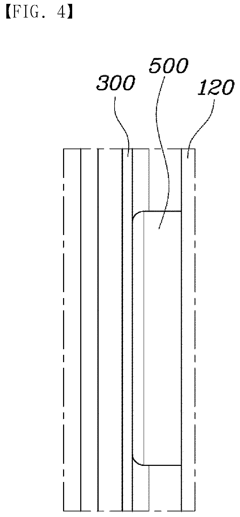

Meanwhile, as illustrated in FIG. 4, the first cap 520 and the second cap 560 of the elastic part 500 may also be disposed at a lateral side of the present battery system. In this case, the first cap 520 may be tightly attached to a lateral surface of the casing body 120, and the second cap 560 may be tightly attached to a lateral surface of the battery module 300. When the first cap 520 is tightly attached to the lateral surface of the casing body 120 and the second cap 560 is tightly attached to the lateral surface of the battery module 300, the first cap 520 and the second cap 560 may be attached and fixed by a bonding agent. Even in this case, the bonding agent needs to be made of a material with heat resistance.

The elastic part 500 may be tightly attached to the casing body 120 or the pack lid 140 and tightly attached to the battery module 300 or the module cover 320. In this case, because the elastic part 500 is instantaneously exposed to high pressure or high temperature in the event of thermal runaway in the battery cell or the battery module 300, it is important to fix the first cap 520 and the second cap 560 by using a bonding agent with heat resistance. The bonding agent with heat resistance needs to be used to fix the elastic part 500 without deforming the bonding agent even in a high-pressure or high-temperature situation, and the elastic part 500 may also be fixed without being deformed because the first cap 520 and the second cap 560 are made of a fire resistance material. Therefore, even in the event of thermal runaway, the casing body 120 or the pack lid 140 and the battery module 300 or the module cover 320 may be stably supported, which may minimize or temporally delay the propagation of the gas or flame to the adjacent cell or module 300.

Meanwhile, in case that the elastic part 500 is stretched before the elastic part 500 is assembled, the pack lid 140 and the casing body 120 are likely to be erroneously assembled. Therefore, at ordinary times, while the elastic part 500 is assembled and after the elastic part 500 is assembled, the first cap 520 and the second cap 560 may be assembled to each other, and the elastic body 540 may be kept compressed between the first cap 520 and the second cap 560. Therefore, as illustrated in FIG. 2, the first cap 520 of the elastic part 500 is inserted and fixed into the second cap 560, and the elastic body 540 is kept compressed between the first cap 520 and the second cap 560.

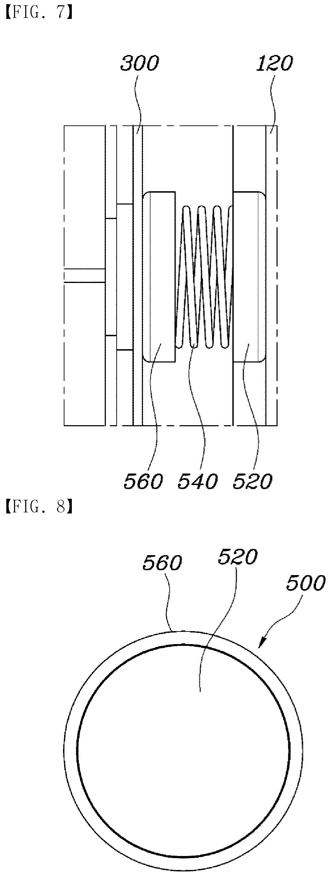

However, in the event of thermal runaway, as illustrated in FIG. 5, the first cap 520 and the second cap 560 of the elastic part 500 are separated, and the elastic body 540 is stretched. Therefore, there is a need for a configuration in which the first cap 520 and the second cap 560 may be separated under a high-temperature environment. With reference to FIG. 8, the first cap 520 and the elastic body 540 of the elastic part 500 may be inserted into the second cap 560 in an interference-fit manner. In this case, the first cap 520 of the elastic part 500 is kept fitted with the second cap 560 at ordinary times. When a temperature in the pack casing 100 is increased by the gas or flame produced in the battery cell or the battery module 300, the first cap 520 is withdrawn from the second cap 560, and the elastic body 540 is stretched and operated by the withdrawal of the first cap 520.

Because the first cap 520 and the elastic body 540 of the elastic part 500 need to be inserted into the second cap 560, an inner diameter of the second cap 560 is equal to an outer diameter of the first cap 520. Therefore, the first cap 520 and the second cap 560 are assembled to each other in an interference-fit manner.

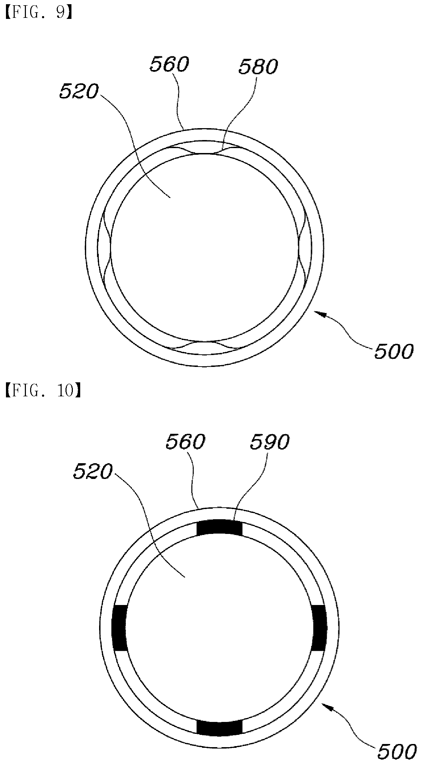

FIG. 9 is a view illustrating the elastic part 500 according to another embodiment of the present disclosure. In this case, a ring or protrusion 580 may be formed between the first cap 520 and the second cap 560 and compressed in a caught/fixed shape when the first cap 520 is inserted into the second cap 560. In the case of the compression in the caught/fixed shape, the ring or protrusion 580 is softened in a high-pressure or high-temperature situation caused by thermal runaway, such that the first cap 520 is withdrawn from the second cap 560, and the elastic body 540 is stretched and operated by the withdrawal of the first cap 520. In the case of the caught/fixed shape, the ring or protrusion 580 may be formed on an inner surface of the second cap 560 when the second cap 560 is formed, or the ring or protrusion 580 may be attached to the inner surface of the second cap 560 or an outer surface of the first cap 520. One or more ring or protrusions 580 may be present and disposed between the first cap 520 and the second cap 560 to improve coupling properties. The catching, fixing, and fastening are implemented by using the ring or protrusion 580, such that mutual mechanical connect may be implemented even without a separate bonding agent.

As illustrated in FIG. 10, in still another embodiment of the present disclosure, an outer surface portion of the first cap 520 and an inner surface portion of the second cap 560 may be fixed by a bonding agent 590. In this case, the elastic body 540 operates as a bonding agent component of the bonding agent 590 is melted by a high-temperature gas or flame. The bonding agent 590 serves to fix the two opposite ends in case that the first cap 520 is inserted into the second cap 560. In a high-pressure or high-temperature situation caused by thermal runaway, a bonding force of the bonding agent 590 is eliminated, such that the first cap 520 is separated from the second cap 560 and stretched. Therefore, the bonding agent 590 needs to be made of a material that maintains the bonding force at room temperature and decreases in bonding force in a high-temperature situation.

As illustrated in FIGS. 2 and 5, the first cap 520 and the second cap 560 are each provided in the form of a closure opened at one side thereof. Specifically, the first cap 520 and the second cap 560 each have a bottom surface provided to be in surface contact with the casing body 120 or the pack lid 140 and the battery module 300 or the module cover 320 and have a sidewall connected to the bottom surface. A side opposite to the bottom surface is opened, and the opened sides of the first cap 520 and the second cap 560 face each other. Of course, in addition to the circular shape in FIG. 2, the first cap 520 and the second cap 560 may have various shapes as long as the surface contact is enabled. In addition, the first and second caps 520 and 560 may be made of a fire resistance material because the first and second caps 520 and 560 need to prevent the propagation of the gas or flame to the adjacent cell or module 300 in the event of thermal runaway in the battery cell or the battery module 300. The first cap 520 and the second cap 560 may be made of mica or the like, i.e., the fire resistance material, because the first cap 520 and the second cap 560 need to ensure insulation and be lightweight. With the shape and the surface contact method of the first cap 520 and the second cap 560, it is possible to improve assembling stability of the battery system of the present disclosure and increase the elastic force of the elastic part 500 in the event of thermal runaway. Therefore, it is possible to minimize or temporally delay the propagation of heat to the adjacent cell or module 300 in the event of thermal runaway.

The pack casing 100 may include the casing body 120 and the pack lid 140 to ensure assemblability. In the case of a battery mounted in a vehicle, the performance related to a collision may be ensured. Because the propagation of a fire to the outside needs to be prevented in case that the fire occurs in the battery, the pack casing 100 may be made of a metallic material. In addition, among the metallic materials, the pack housing may be made of aluminum because the pack housing needs to ensure formability and be lightweight. The pack casing 100, which is made of a metallic material such as aluminum, may be thermally deformed because of expansion under a high-pressure or high-temperature environment caused by thermal runaway in some of the battery cells or the battery module 300, and the amount of expansion may vary depending on the points even in the single pack casing 100.

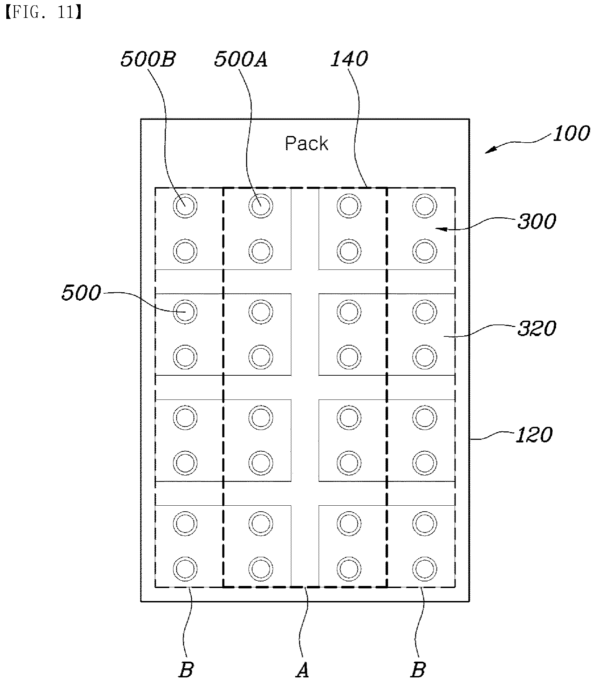

With reference to FIG. 11, in the case of an outer portion B spaced apart from a center of the pack casing 100, the lateral surface and the bottom surface of the housing shape of the casing body 120 are also integrated, and the pack lid 140 is also coupled to the casing body 120 in various ways such as welding, attachment, and mechanical fastening, such that the amount of expansion is relatively small even in the event of thermal runaway. In contrast, in the case of a central portion A of the pack casing 100, the casing body 120 has a large surface shape for mounting the battery module 300, and the pack lid 140 is not a portion coupled directly to the casing body 120. Therefore, the amount of expansion is maximized in the event of thermal runaway. That is, in the event of thermal runaway, the pack lid 140 further expands as the distance from the central portion A decreases.

The plurality of elastic parts 500 may be provided between the pack casing 100 and the battery module 300, and the amount of expansion of the pack lid 140 may vary depending on the points. Therefore, the plurality of elastic parts 500 may be disposed such that the elastic part having the elastic body 540 with a high elastic modulus or a large amount of expansion may be disposed to be close to the central portion A of the pack lid 140. Because the elastic body 540 with a high elastic modulus or a large amount of expansion is disposed to be close to the central portion A of the pack lid 140, the elastic force of the elastic part 500 increases as the distance from the central portion A of the pack lid 140 decreases. Therefore, the elastic parts 500 in the pack casing 100 may operate in a balanced manner, such that the stability of the entire battery system may be sufficiently ensured. In this case, in the case of the plurality of elastic parts 500 present in the pack casing 100, the elastic force may be adjusted by using materials with different elastic moduli in case that the elastic body 540 of the elastic part 500 has a constant length. In case that the elastic modulus of the elastic body 540 is constant, the elastic forces may be differently tuned by varying the amount of compression by varying the length of the elastic body 540.

The module cover 320 is coupled to the battery module 300 of the present disclosure. The module cover 320 covers one side surface of the battery module 300 to protect the battery module 300 and the battery cells positioned in the battery module from the gas or flame. The elastic part 500 may be provided between the pack casing 100 and the module cover 320 to prevent the propagation of the gas or flame to the adjacent cell or the module 300 in the event of thermal runaway in the battery cell or the battery module 300. As illustrated in FIG. 6, when a high-pressure gas or a high-temperature flame is produced at this position, the elastic part 500 is stretched, and the first cap 520 or the second cap 560 of the elastic part 500 is supported by the pack casing 100 or the module cover 320, such that the module cover 320 is pressed based on the pack casing 100, and the gas or flame is prevented from being introduced into the corresponding battery module 300.

In addition, as another embodiment, the elastic part 500 is disposed between the pack casing 100 and the module cover 320, and one end of the elastic part 500 is sometimes fixed only to the module cover 320. As described above, the amount of expansion caused by thermal runaway in the pack casing 100 may vary depending on the points. In addition, because the amount of expansion increases as the distance from the central portion A of the pack lid 140 decreases, the pack lid 140 expands in an arcuate shape. Therefore, during the expansion, the central portion A of the pack lid 140 relatively expands in the form of a horizontal surface. In contrast, the point other than the central portion expands in a shape of a surface inclined in a diagonal direction. In this case, when the elastic part 500 is attached to the pack casing 100 as well as the module cover 320, the surface contact of the elastic part 500, which is attached to the surface inclined in the diagonal direction of the pack casing 100, becomes unstable when the pack casing 100 is expanded by thermal runaway, the battery module 300 or the module cover 320 may not sufficiently pressed based on the pack casing 100. Therefore, the elastic part 500 may be fixed only to the module cover 320 in a state in which one end of the elastic part 500 is fixed to the module cover 320 and the other end of the elastic part 500 is spaced apart from the pack casing 100. Thereafter, in the event of thermal runaway in the battery cell or the battery module 300, the elastic part 500 is stretched by the gas or flame in the pack casing 100. In case that the elastic part 500 is stretched, such that the two opposite ends of the elastic part 500 may be supported on the pack casing 100 and the module cover 320 and sufficiently press the module cover 320 based on the pack casing 100.

Meanwhile, the pack casing 100 may include the casing body 120 opened at one side thereof, and the pack lid 140 configured to close the opened side of the casing body 120. The elastic part 500 may be provided between the pack lid 140 and the battery module 300. In case that a high-pressure gas or a high-temperature flame is produced by thermal runaway in the battery cell or the battery module 300, the pack lid 140 expands. As the pack lid 140 expands, a spacing distance between the pack lid 140 and the battery module 300 is also increased, and the elastic part 500 provided between the pack lid 140 and the battery module 300 is stretched by a distance at which the pack lid 140 and the battery module 300 are spaced apart from each other, such that the two opposite ends may be respectively supported on the pack lid 140 and the battery module 300. Therefore, the elastic part 500 may press the battery module 300 based on the pack lid 140 and prevent the propagation of the gas or flame to the adjacent battery cell or battery module 300 and temporally delay the heat propagation.

The battery system according to the present disclosure may be applied to the battery systems of various vehicles such as internal combustion engine vehicles, electric vehicles, hybrid vehicles, and fuel cell electric vehicles. In addition to the vehicle, the battery system may be applied to the battery systems in various fields, such as industrial energy storage systems (ESSs) or household ESSs, and small-scale battery packs.

While the specific embodiments of the present disclosure have been illustrated and described, it will be obvious to those skilled in the art that the present disclosure may be variously modified and changed without departing from the technical spirit of the present disclosure defined in the appended claims.

## Claims

1. A battery system comprising:
a battery module;
a pack casing in which the battery module is installed; and
an elastic part installed between the pack casing and the battery module and configured to press the battery module based on the pack casing, the elastic part having an end supported on the pack casing or the battery module by means of a cap made of a fire resistance material.

2. The battery system of claim 1, wherein a venting part is formed on an outer surface of the battery module facing the pack casing, and the elastic part is disposed at a point that avoids the venting part.

3. The battery system of claim 1, wherein the elastic part comprises a first cap, a second cap,
and an elastic body, and the elastic body is positioned between the first cap and the second cap.

4. The battery system of claim 3, wherein the first cap of the elastic part is tightly attached to an inner surface of the pack casing, and the second cap of the elastic part is tightly attached to an outer surface of the battery module.

5. The battery system of claim 3, wherein the first cap or the second cap of the elastic part is attached to an inner surface of the pack casing or an outer surface of the battery module by a bonding agent, and
the bonding agent is made of a heat resistance material.

6. The battery system of claim 3, wherein the first cap of the elastic part is inserted and fixed into the second cap, such that the elastic body is kept compressed between the first cap and the second cap and
wherein the first cap of the elastic part is withdrawn from the second cap by a gas or flame produced in the battery module or an increase in internal temperature of the pack casing, and the elastic body is stretched by the withdrawal of the first cap.

7. The battery system of claim 6, wherein the first cap of the elastic part is caught and fixed in a state of being inserted into the second cap, and the first cap is separated from the second cap when the second cap is expanded by a high temperature.

8. The battery system of claim 6, wherein the first cap of the elastic part is bonded and fixed in a state of being inserted into the second cap, and the first cap is separated from the second cap when a bonding force is eliminated by a high temperature.

9. The battery system of claim 1, wherein the elastic part is provided as a plurality of elastic parts between the pack casing and the battery module, an elastic force of the elastic part increases as a distance from a center of the pack casing decreases, and the elastic part close to the center of the pack casing has a higher elastic modulus or a larger amount of compression than the elastic part spaced apart from the center of the pack casing.

10. The battery system of claim 1, wherein a module cover is coupled to the battery module and covers one side surface of the battery module, the elastic part is between the pack casing and the module cover, and the elastic part is disposed at a point between the pack casing and the module cover and fixed to the module cover.

11. The battery system of claim 10, wherein one end of the elastic part is fixed to the module cover, and the other end of the elastic part is spaced apart from the pack casing.

12. The battery system of claim 10, wherein the elastic part is stretched by a gas or flame or a high temperature in the pack casing, and two opposite ends of the elastic part are respectively supported on the pack casing and the module cover when the elastic part is stretched.

13. The battery system of claim 1, wherein the pack casing comprises:
a casing body opened at one side thereof; and
a pack lid configured to close the casing body and
wherein the elastic part is positioned between the pack lid and the battery module.

14. The battery system of claim 13, wherein a spacing distance between the pack lid and the battery module is increased by expansion of the pack lid when a gas or flame or a high temperature occurs in the pack casing, the elastic part is stretched to the extent that the spacing distance between the pack lid and the battery module is increased, and the elastic part presses the battery module based on the pack lid.

15. A vehicle comprising the battery system of claim 1.
